# EUROPEAN PATENT APPLICATION

(11) **EP 2 693 593 A1**
(43) Date of publication of application: **05.02.2014**
(21) Application number: 11862458.4
(22) Date of filing: 28.03.2011
(51) Int. Cl.: H02J 7/00, B60L 3/00, B60L 11/18, H01M 10/44

(54) **ELECTRIC VEHICLE AND CONTROL METHOD THEREFOR**

(71) Applicant: TOYOTA JIDOSHA KABUSHIKI KAISHA, Toyota-shi, Aichi-ken, 471-8571 (JP)
(72) Inventor: ISHISHITA, Teruo, Toyota-shi Aichi-ken 471-8571 (JP)
(74) Representative: Kuhnen & Wacker
(86) International application number: PCT/JP2011/057581
(87) International publication number: WO 2012/131864

(57) **Abstract**

A hybrid vehicle, which is illustrated as a representative example of an electrically powered vehicle, includes: a power storage device in which deposition-related deterioration takes place due to a phenomenon of deposition of metal on an electrode surface during charging; a power generating structure for generating charging power for the power storage device; a charge state estimating unit for estimating a remaining level of the power storage device based on a state value of the power storage device; and a charging/discharging control unit for controlling charging/discharging of the power storage device based on the remaining level estimate value estimated by the charge state estimating unit. The charging/discharging control unit restricts the power generating structure from generating the charging power for the power storage device when the remaining level estimate value is decreased to fall below a predetermined criteria value.

## Description

### TECHNICAL FIELD

The present invention relates to an electrically powered vehicle and a method for controlling the electrically powered vehicle, more particularly, charging control for a power storage device, which is provided in an electrically powered vehicle and in which deposition-related deterioration takes place due to a phenomenon of deposition of metal on an electrode surface during charging.

### BACKGROUND ART

Conventionally, among electrically powered vehicles capable of generating vehicle driving power using electric power from power storage devices provided therein, there has been used an electrically powered vehicle including a power generating structure that charges the power storage device during vehicle traveling. Further, an electrically powered vehicle has been developed which is capable of not only internally charging a power storage device during vehicle traveling but also externally charging the power storage device using a power source external to the vehicle.

In such an electrically powered vehicle, the power storage device is repeatedly discharged and charged. Accordingly, a state of charge (SOC) of the power storage device needs to be controlled and managed. Generally, using the above-described power generating structure, the power storage device is appropriately charged, thereby controlling the SOC so as not to fall out of a predetermined control range.

Here, it is known that performance of a secondary battery, which is representatively used as the power storage device, is becoming deteriorated while being used. As one manner of such deterioration, Japanese Patent Laying-Open No. 2006-12761 (PTD 1) describes that charging and discharging of the power storage device causes expansion and contraction of positive electrode and negative electrode of each cell of the secondary battery, which results in volume change of the electrodes. In PTD 1, the SOC of the secondary battery, which is changed in a reflection of a degree of deterioration of the secondary battery, is estimated based on the volume change of at least one of the positive electrode and the negative electrode as well as measurement of temperature.

### CITATION LIST

### PATENT DOCUMENT

PTD 1: Japanese Patent Laying-Open No. 2006-12761

### SUMMARY OF INVENTION

### TECHNICAL PROBLEM

In PTD 1, when the SOC of the secondary battery is estimated based on the volume change of the electrodes and the temperature, SOC management and charging/discharging control for the secondary battery are performed based on the SOC thus estimated.

Here, assume that an lithium ion battery employing lithium as an electrode material is applied as the secondary battery. If such a secondary battery is charged when the SOC is decreased, i.e., when restraint stress in the housing is decreased, metallic lithium is deposited on a surface of the negative electrode of the lithium ion battery. An amount of deposited metallic lithium is increased as charging power is increased. Accordingly, the increase in the charging power when the SOC is decreased results in development of deterioration of the lithium ion battery. This presumably leads to significant decrease of the performance of the battery. Thus, it is necessary to control the SOC sufficiently in a reflection of such a change in the performance of the battery.

Accordingly, the present invention has been made to solve the foregoing problem, and has an object to control charging of a power storage device provided in an electrically powered vehicle so as to suppress deposition-related deterioration taking place due to a phenomenon of deposition of metal on an electrode surface during charging.

### SOLUTION TO PROBLEM

According to a certain aspect of the present invention, an electrically powered vehicle includes: a power storage device in which deposition-related deterioration takes place due to a phenomenon of deposition of metal on an electrode surface during charging; a power generating structure for generating charging power for the power storage device; a charge state estimating unit for estimating a remaining level of the power storage device based on a state value of the power storage device; and a charging/discharging control unit for controlling charging/discharging of the power storage device based on a remaining level estimate value estimated by the charge state estimating unit. The charging/discharging control unit restricts the power generating structure from generating the charging power for the power storage device when the remaining level estimate value is decreased to fall below a predetermined criteria value.

Preferably, the charging/discharging control unit includes an upper limit value setting unit for setting a charging power upper limit value for a present state of the power storage device at least based on the remaining level estimate value and a temperature of the power storage device. When the remaining level estimate value is decreased to fall below the criteria value, the upper limit value setting unit decreases the charging power upper limit value as the remaining level estimate value becomes smaller.

Preferably, the charging/discharging control unit further includes a low remaining level frequency calculating unit for calculating a low remaining level frequency, which represents how frequently the remaining level estimate value becomes equal to or less than a predetermined threshold value. The upper limit value setting unit decreases the criteria value as the low remaining level frequency becomes smaller.

Preferably, the charging/discharging control unit includes a charging instructing unit for causing the power generating structure to generate the charging power at least when the remaining level estimate value reaches a lower limit value of a control range. The charging instructing unit causes the charging power to decrease from a first value to a second value when the remaining level estimate value is smaller than the criteria value.

Preferably, the charging instructing unit switches between the first value and the second value by gradually changing the charging power between the first value and the second value.

Preferably, the charging/discharging control unit includes a charging instructing unit for causing the power generating structure to generate the charging power at least when the remaining level estimate value reaches a lower limit value of a control range. When the remaining level estimate value is smaller than the criteria value, the charging instructing unit causes the charging power to decrease as the remaining level estimate value becomes smaller.

Preferably, the charging/discharging control unit includes an upper limit value setting unit for setting a charging power upper limit value for a present state of the power storage device at least based on the remaining level estimate value and a temperature of the power storage device. The upper limit value setting unit sets the charging power upper limit value so as to satisfy a first condition and a second condition, the first condition being such that a voltage of the power storage device does not exceed a predetermined voltage upper limit value, the second condition being such that a degree of deposition-related deterioration of the power storage device does not exceed a predetermined permissible level.

Preferably, the criteria value is set based on a correlation between restraint stress and the remaining level, the restraint stress being imposed on a plurality of power storage cells included in the power storage device.

According to another aspect of the present invention, a method for controlling an electrically powered vehicle is provided. The electrically powered vehicle includes a power storage device in which deposition-related deterioration takes place due to a phenomenon of deposition of metal on an electrode surface during charging, and a power generating structure for generating charging power for the power storage device. The method includes the steps of: estimating a remaining level of the power storage device based on a state value of the power storage device; and controlling charging/discharging of the power storage device based on a remaining level estimate value estimated. The step of controlling charging/discharging restricts the power generating structure from generating the charging power for the power storage device when the remaining level estimate value is decreased to fall below a predetermined criteria value.

### ADVANTAGEOUS EFFECTS OF INVENTION

According to the present invention, deposition-related deterioration can be suppressed which takes place due to a phenomenon of deposition of metal on an electrode surface during charging of a power storage device provided in a vehicle.

### BRIEF DESCRIPTION OF DRAWINGS

Fig. 1 is a schematic configuration diagram of a hybrid vehicle illustrated as a representative example of an electrically powered vehicle in a first embodiment of the present invention.
Fig. 2 is a configuration diagram of a power split device shown in Fig. 1.
Fig. 3 is a nomographic chart of the power split device.
Fig. 4 is a function block diagram illustrating charging/discharging control for a power storage device provided in the electrically powered vehicle according to the first embodiment of the present invention.
Fig. 5 is a function block diagram further illustrating a configuration of a charging/discharging control unit shown in Fig. 4.
Fig. 6 shows a relation between an SOC and an amount of deposited lithium when a lithium ion battery is applied as the power storage device.
Fig. 7 shows a charging characteristic of the power storage device.
Fig. 8 shows how the SOC of the power storage device and the charging power are changed with time due to traveling of the hybrid vehicle.
Fig. 9 is a flowchart showing a procedure of control process for implementing the charging control for the power storage device provided in the electrically powered vehicle according to the first embodiment of the present invention.
Fig. 10 is a flowchart illustrating a process in a step S03 of Fig. 9 more in detail.
Fig. 11 is a flowchart further illustrating a process in a step S07 of Fig. 9.
Fig. 12 is a conceptual view showing a distribution of SOC of the power storage device during a certain period of time.
Fig. 13 is a block diagram showing a control structure of a charging/discharging control unit in a control device according to a second embodiment of the present invention.
Fig. 14 is a flowchart showing a procedure of control process of a low SOC frequency calculating unit.
Fig. 15 illustrates setting of the charging power upper limit value in the electrically powered vehicle according to the second embodiment.
Fig. 16 illustrates setting of a charging power upper limit value in an electrically powered vehicle according to a modification of the second embodiment.
Fig. 17 is a flowchart illustrating setting of the charging power upper limit value in the electrically powered vehicle according to the modification of the second embodiment.

### DESCRIPTION OF EMBODIMENTS

The following describes embodiments of the present invention in detail with reference to figures. It should be noted that the same reference characters in the figures indicate the same or corresponding portions.

### [First Embodiment]

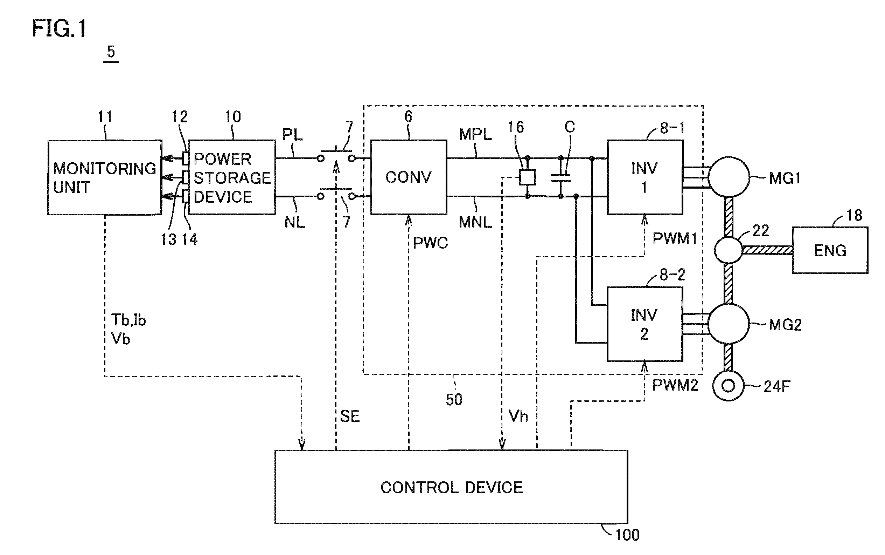

Fig. 1 is a schematic configuration diagram of a hybrid vehicle 5 illustrated as a representative example of an electrically powered vehicle according to a first embodiment of the present invention.

Referring to Fig. 1, hybrid vehicle 5 includes an engine (internal combustion engine) 18 and motor generators MG1, MG2. Hybrid vehicle 5 further includes a power storage device 10 capable of supplying/receiving electric power to/from motor generators MG1, MG2.

Power storage device 10 is a re-dischargeable power storage element. Representatively, a secondary battery is applied thereto, such as a lithium ion battery or a nickel hydride battery. Power storage device 10 includes: a plurality of cells of the secondary battery, which are connected in series with and in parallel with one another; and restraining members disposed to sandwich the plurality of cells of the secondary battery so as to correspond to the housings' surfaces having larger areas. Each of the plurality of cells of the secondary battery has a positive electrode and a negative electrode contained in its housing. Due to charging/discharging, the positive electrode and the negative electrode are expanded/contracted and are changed in volume. The housings of the plurality of cells of the secondary battery are collectively restrained between the restraining members provided to sandwich them. Fig. 1 shows a system configuration associated with charging/discharging control for power storage device 10 in hybrid vehicle 5.

A monitoring unit 11 detects a "state value" of power storage device 10 based on respective outputs of a temperature sensor 12, a voltage sensor 13, and a current sensor 14 provided in power storage device 10. Specifically, the "state value" at least includes a temperature Tb of power storage device 10. As required, the state value further includes a voltage Vb and/or a current Ib of power storage device 10. Because the secondary battery is representatively used as power storage device 10 as described above, temperature Tb, voltage Vb, and current Ib of power storage device 10 will be also referred to as "battery temperature Tb", "battery voltage Vb", and "battery current Ib". Furthermore, battery temperature Tb, battery voltage Vb, and battery current Ib will be also collectively referred to as "battery data".

Temperature sensor 12, voltage sensor 13, and current sensor 14 comprehensively represent temperature sensors, voltage sensors, and current sensors provided in power storage device 10, respectively. In other words, actually, a plurality of temperature sensors 12, voltage sensors 13, and/or current sensors 14 are generally provided.

Engine 18, motor generator MG1, and motor generator MG2 are mechanically coupled to one another via a power split device 22.

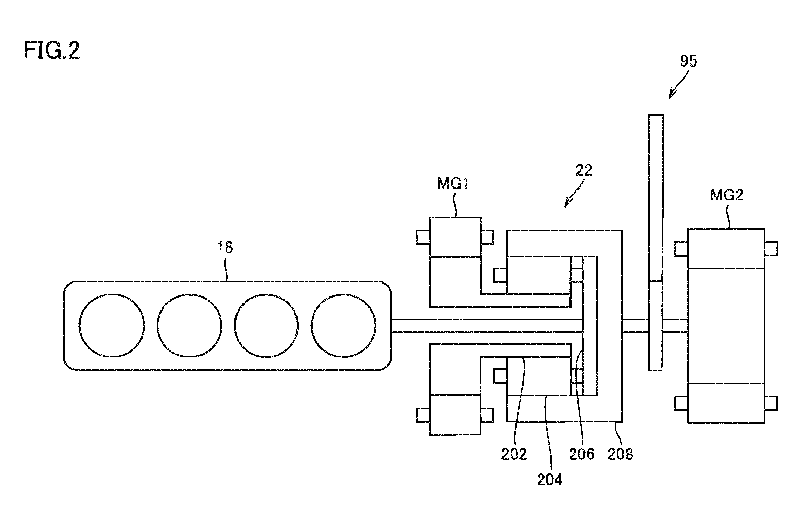

Referring to Fig. 2, power split device 22 will be described more. Power split device 22 is constituted of a planetary gear including a sun gear 202, pinion gears 204, a carrier 206, and a ring gear 208.

Pinion gears 204 engage with sun gear 202 and ring gear 208. Carrier 206 rotatably supports pinion gears 204. Sun gear 202 is coupled to a rotation shaft of motor generator MG1. Carrier 206 is coupled to a crankshaft of engine 18. Ring gear 208 is coupled to a rotation shaft of motor generator MG2 and a speed reducer 95.

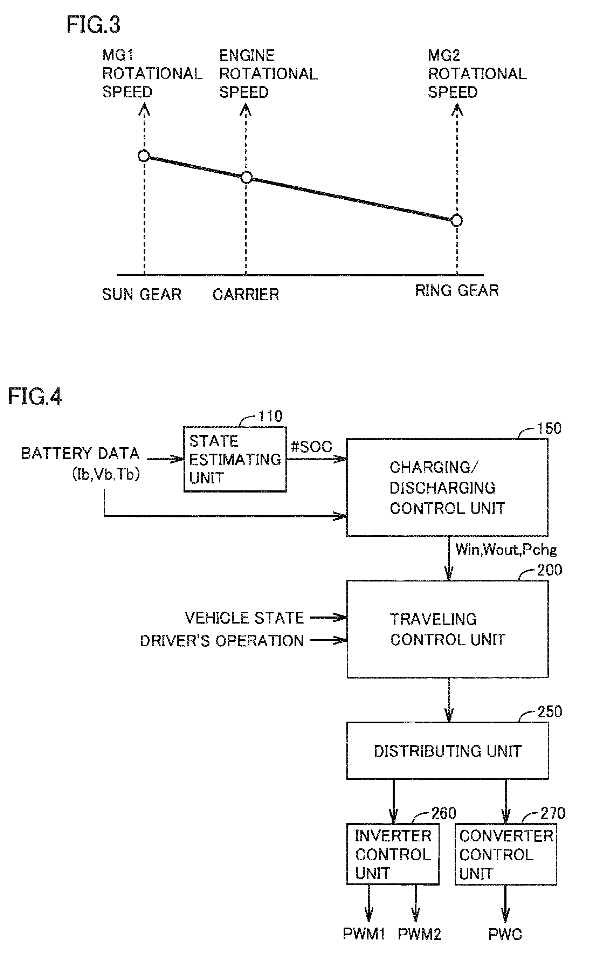

Engine 18, motor generator MG1, and motor generator MG2 are coupled to one another via power split device 22 constituted of the planetary gear. Accordingly, rotational speeds of engine 18, motor generator MG1, and motor generator MG2 are in a relation such that they are connected to one another in a straight line in a nomographic chart as shown in Fig. 3.

As a result, during traveling of hybrid vehicle 5, power split device 22 splits driving power generated by operation of engine 18 into two, one of which is distributed to motor generator MG1 and the other of which is distributed to motor generator MG2. The driving power distributed from power split device 22 to motor generator MG1 is used for an operation of generating electric power. On the other hand, the driving power distributed to motor generator MG2 is combined with driving power generated by motor generator MG2, and is then used to drive driving wheels 24F.

As such, in accordance with a traveling state of hybrid vehicle 5, the driving power is distributed and combined among the above-described three components by means of power split device 22, thereby driving driving wheels 24F. Further, during traveling of hybrid vehicle 5, power storage device 10 can be charged with electric power generated by motor generator MG1 using an output of engine 18. Thus, engine 18 corresponds to an "internal combustion engine" and motor generator MG2 corresponds to a "first motor". Further, motor generator MG1 corresponds to a "power generating structure" and a "second motor".

Referring to Fig. 1 again, hybrid vehicle 5 further includes a power control unit 50. Power control unit 50 is configured to bidirectionally convert electric power between power storage device 10 and each of motor generator MG1 and motor generator MG2. Power control unit 50 includes a converter (CONV) 6, and a first inverter (INV1) 8-1 and a second inverter (INV2) 8-2 respectively associated with motor generators MG1 and MG2.

Converter (CONV) 6 is configured to bidirectionally convert DC voltage between power storage device 10 and a positive bus MPL, which transfers a DC link voltage of each of inverters 8-1, 8-2. Namely, the input/output voltage of power storage device 10 and the DC voltage between positive bus MPL and negative bus MNL are bidirectionally stepped up or down. The operation of stepping up or down in converter 6 is controlled in accordance with a switching command PWC from control device 100. Further, a smoothing capacitor C is connected between positive bus MPL and negative bus MNL. Further, DC voltage Vh between positive bus MPL and negative bus MNL is detected by a voltage sensor 16.

Each of first inverter 8-1 and second inverter 8-2 bidirectionally converts electric power between the DC power of positive bus MPL and negative bus MNL and the AC power supplied to/from motor generators MG1 and MG2. Mainly, in accordance with a switching command PWM1 from control device 100, first inverter 8-1 converts AC power, which is generated by motor generator MG1 using output of engine 18, to DC power, and supplies it to positive bus MPL and negative bus MNL Accordingly, also during the vehicle traveling, power storage device 10 can be actively charged using output of engine 18.

Further, when starting engine 18, in accordance with switching command PWM1 from control device 100, first inverter 8-1 converts DC power supplied from power storage device 10 into AC power, and supplies it to motor generator MG1. In this way, engine 18 can be started using motor generator MG1 as a starter.

In accordance with a switching command PWM2 from control device 100, second inverter 8-2 converts DC power supplied via positive bus MPL and negative bus MNL into AC power, and supplies it to motor generator MG2. In this way, motor generator MG2 generates driving power for hybrid vehicle 5.

Meanwhile, during regenerative braking of hybrid vehicle 5, motor generator MG2 generates AC power as the speed of driving wheels 24F is reduced. In doing so, in accordance with switching command PWM2 from control device 100, second inverter 8-2 converts the AC power generated by motor generator MG2 to DC power, and supplies it to positive bus MPL and negative bus MNL Accordingly, while reducing speed or traveling down a sloping road, power storage device 10 is charged.

Between power storage device 10 and power control unit 50, a system main relay 7 is provided which is inserted in and connected to positive line PL and negative line NL. System main relay 7 is turned on/off in response to a relay control signal SE from control device 100.

Control device 100 is representatively constituted of an electronic control unit (ECU). The ECU mainly includes: a CPU (Central Processing Unit); a memory region such as a RAM (Random Access Memory) or a ROM (Read Only Memory); and an input/output interface. In control device 100, the CPU reads out, to the RAM, a program stored in advance in the ROM and executes it, thereby performing control associated with vehicle traveling and charging/discharging. It should be noted that at least a part of the ECU may be configured to perform a predetermined mathematical/logical calculation process using hardware such as an electronic circuit.

As exemplary information sent to control device 100, Fig. 1 illustrates the battery data (battery temperature Tb, battery voltage Vb, and battery current Ib) as well as DC voltage Vh. The battery data is provided from monitoring unit 11 and DC voltage Vh is provided from voltage sensor 16 positioned between the lines of positive bus MPL and negative bus MNL. Although not shown in the figure, a current detection value of each phase of motor generators MG1, MG2 and a rotation angle detection value of each of motor generators MG1, MG2 are also sent to control device 100.

Fig. 4 is a function block diagram illustrating charging/discharging control for the power storage device in the electrically powered vehicle according to the first embodiment of the present invention. It should be noted that each functional block in each of the below-mentioned block diagrams inclusive of Fig. 4 can be implemented by control device 100 performing software processing in accordance with a program set in advance. Alternatively, a circuit (hardware) having a function corresponding to the functional block can be provided in control device 100.

Referring to Fig. 4, a state estimating unit 110 estimates an SOC of power storage device 10 based on the battery data (Ib, Vb, Tb) sent from monitoring unit 11. The SOC represents a ratio of a currently remaining level of charges to a full charge level in percentage (0% to 100%). For example, state estimating unit 110 sequentially calculates an SOC estimate value (#SOC) of power storage device 10 based on an integrated value of the charging amount and discharging amount of power storage device 10. The integrated value of the charging amount and discharging amount is derived based on battery current Ib and battery voltage Vb. Alternatively, the SOC estimate value (#SOC) may be found based on a relation between an open circuit voltage (OCV) and the SOC.

The SOC estimate value (#SOC) calculated by state estimating unit 110 is provided to charging/discharging control unit 150.

Based on the state of power storage device 10, charging/discharging control unit 150 sets a charging power upper limit value Win and a discharging power upper limit value Wout. Further, charging/discharging control unit 150 determines whether or not power storage device 10 needs to be charged, and sets a charging power command value Pchg for power storage device 10. Charging power command value Pchg is set to satisfy Pchg = 0 when power storage device 10 does not need to be charged. On the other hand, when it is determined that power storage device 10 needs to be charged, charging power command value Pchg is set to satisfy Pchg > 0.

A traveling control unit 200 calculates vehicle driving power and vehicle braking power required in the entire hybrid vehicle 5, in accordance with the vehicle state of hybrid vehicle 5 and a driver's operation. The driver's operation includes an amount of stepping on an accelerator pedal (not shown), a position of a shift lever (not shown), an amount of stepping on a brake pedal (not shown), or the like.

Further, traveling control unit 200 determines output requests for motor generators MG1, MG2 and an output request for engine 18 in order to achieve the requested vehicle driving power or vehicle braking power. Hybrid vehicle 5 can travel only using the output of motor generator MG2 with engine 18 being stopped. Hence, by determining each of the output requests so as to avoid operation of engine 18 in a region with bad fuel consumption, energy efficiency can be increased. Further, the output requests for motor generators MG1, MG2 are set with charging/discharging of power storage device 10 being restricted in a range (Win to Wout) of electric power chargeable/dischargeable to/from power storage device 10. In other words, when the output electric power of power storage device 10 cannot be secured, the output of motor generator MG2 is restricted.

In accordance with the output requests for motor generators MG1, MG2 set by traveling control unit 200, a distributing unit 250 calculates torques and rotational speeds of motor generators MG1, MG2. Then, distributing unit 250 sends control commands regarding the torques and rotational speeds to an inverter control unit 260, and at the same time, sends a control command value regarding DC voltage Vh to a converter control unit 270.

Meanwhile, distributing unit 250 generates engine control commands indicating engine power and engine target rotational speed determined by traveling control unit 200. In accordance with each of the engine control commands, fuel injection, ignition timing, valve timing, and the like in engine 18 are controlled although they are not shown in the figures.

Inverter control unit 260 generates, in accordance with the control commands from distributing unit 250, switching commands PWM1 and PWM2 for driving motor generators MG1 and MG2. Switching commands PWM1 and PWM2 are respectively sent to inverters 8-1 and 8-2.

Converter control unit 270 generates a switching command PWC in accordance with the control command from distributing unit 250, so as to control DC voltage Vh. In accordance with switching command PWC, converter 6 converts voltage so as to control electric power charged to and discharged from power storage device 10.

In this way, traveling control for hybrid vehicle 5 is achieved to improve energy efficiency in accordance with the vehicle state and the driver's operation.

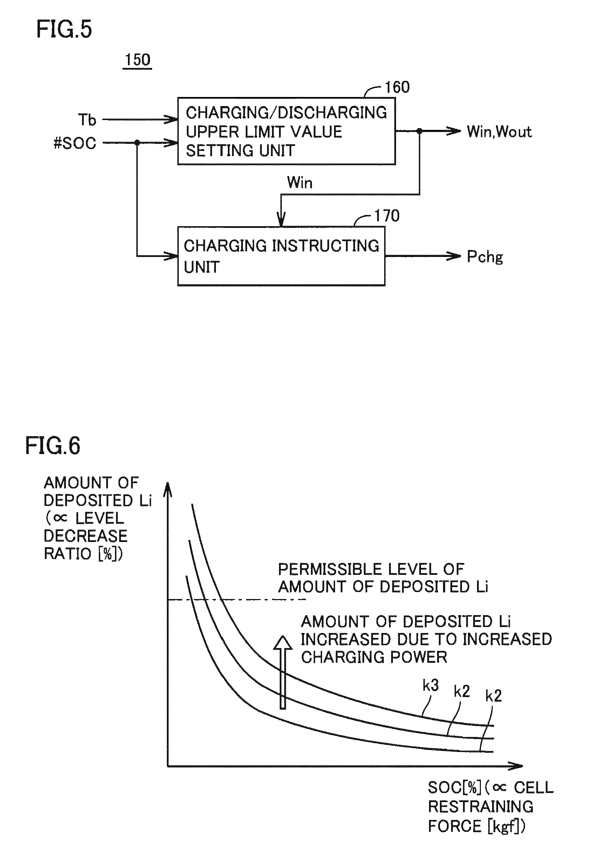

Fig. 5 shows the configuration of charging/discharging control unit 150 (Fig. 4) more in detail.

Referring to Fig. 5, charging/discharging control unit 150 includes a charging/discharging upper limit value setting unit 160, and a charging instructing unit 170.

Charging/discharging upper limit value setting unit 160 sets charging power upper limit value Win and discharging power upper limit value Wout at least based on battery temperature Tb and the SOC estimate value (#SOC). As the SOC estimate value (#SOC) is decreased, discharging power upper limit value Wout is set to be gradually decreased. Accordingly, power storage device 10 is avoided from being overdischarged. In contrast, as the SOC estimate value (#SOC) is increased, charging power upper limit value Win is set to be gradually decreased. Accordingly, power storage device 10 is avoided from being overcharged.

Further, power storage device 10, which is a secondary battery or the like, has a temperature dependency such that the internal resistance is increased particularly when the temperature thereof is low. On the other hand, when the temperature thereof is high, it is necessary to prevent the temperature from increasing too high due to further heat generation. Hence, when the temperature is low and high, it is preferable to restrict the charging power and the discharging power. Thus, charging power upper limit value Win and discharging power upper limit value Wout are set in accordance with the SOC estimate value (#SOC) and battery temperature Tb.

Further, each of the plurality of cells of the secondary battery constituting power storage device 10 is changed in volume because the positive electrode and the negative electrode are expanded/contracted due to charging/discharging. The change in volume of each electrode results in change in stress (restraint stress) acting on the housing of each of the cells of the secondary battery. Particularly, when the SOC of the cell of the secondary battery is decreased due to discharging, the electrode is contracted to decrease the restraint stress. If the cell of the secondary battery is charged with the restraint stress being thus decreased, a reaction proceeds to deteriorate the electrode material within the housing, with the result that deterioration of an amount of state, such as internal resistance or full charge level, is developed. For example, the development of the deterioration of the cell of the secondary battery results in increased internal resistance and decreased full charge level.

In particular, if the cell of the secondary battery is charged when the SOC is decreased, i.e., when restraint stress is decreased assuming that an lithium ion battery employing lithium as an electrode material is applied to the cell of the secondary battery, metallic lithium is deposited on a surface of the negative electrode of the lithium ion battery. Such deposition of lithium results in significant development of deterioration in terms of the full charge level. Further, the increase in the amount of deposited lithium may result in decrease of resistance to overheat. In the description below, the deterioration thus taking place due to the phenomenon of deposition of lithium on the surface of the negative electrode of such a lithium ion battery will be also referred to as "deposition-related deterioration of the battery".

Fig. 6 shows a relation between the SOC and the amount of deposited lithium when the lithium ion battery is applied as power storage device 10. In Fig. 6, the horizontal axis represents the SOC of the lithium ion battery, whereas the vertical axis represents the amount of deposited lithium within the housing of the battery. In the figure, a solid line k1 represents a relation between the SOC and the amount of deposited lithium when the lithium ion battery is charged with charging power P1. A solid line k2 represents a relation between the SOC and the amount of deposited lithium when the lithium ion battery is charged with charging power P2 (P2 > P1). A solid line k3 represents a relation between the SOC and the amount of deposited lithium when the lithium ion battery is charged with charging power P3 (P3 > P2).

Referring to Fig. 6, the SOC of the lithium ion battery in the horizontal axis is in proportion to the stress (restraint stress) acting on the housing of each cell of the secondary battery. The amount of deposited lithium in the vertical axis is in proportion to a degree of development of deterioration of the cell of the secondary battery.

In a region (hereinafter, referred to as "low SOC region") in which the SOC of the lithium ion battery is low, the restraint stress in each cell of the secondary battery is decreased. Hence, when the cell of the secondary battery is charged in the low SOC region, a difference becomes large between the average potential of the negative electrode and the potential (local potential) of the negative electrode's portion locally having the minimum potential, with the result that an increased amount of lithium is deposited on the surface of the negative electrode. The amount of deposited lithium is increased as the charging power is increased as shown in Fig. 6. This leads to a situation involving development of deterioration of the secondary battery.

To address this, in the electrically powered vehicle according to the first embodiment, charging/discharging control unit 150 controls charging/discharging of power storage device 10 so as to restrict the charging power of power storage device 10 in the low SOC region in which the amount of deposited lithium is presumably increased due to charging.

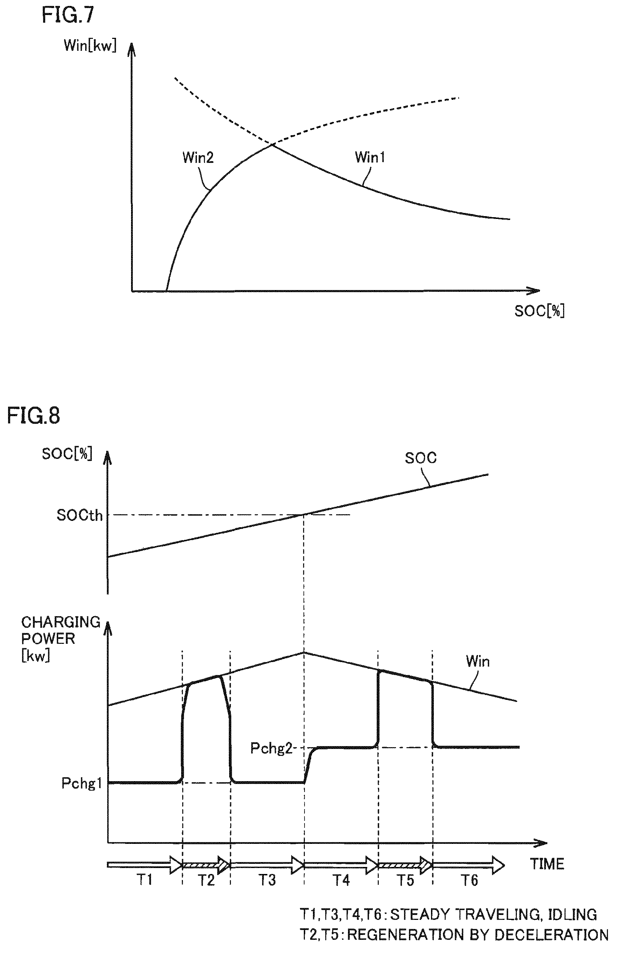

With reference to Fig. 7, the following fully describes how charging/discharging upper limit value setting unit 160 (Fig. 5) sets charging power upper limit value Win.

Charging/discharging upper limit value setting unit 160 sets charging power upper limit value Win based on the SOC estimate value (#SOC) and battery temperature Tb, with reference to a previously set relation between the SOC estimate value (#SOC) and charging power upper limit value Win, specifically, with reference to a charging characteristic shown in Fig. 7.

Fig. 7 shows the charging characteristic of power storage device 10. In Fig. 7, the horizontal axis represents the SOC (% as a unit), and the vertical axis represents charging power upper limit value Win (W (watt) as a unit).

Fig. 7 shows two charging power upper limit values Win1, Win2 each set in accordance with the SOC. Charging power upper limit value Win1 is set such that battery voltage Vb does not exceed an upper limit voltage set in advance. Here, the upper limit voltage corresponds to such a charging limit value that overcharging can take place if power storage device 10 is charged further. Hence, charging power upper limit value Win1 is set at the maximum battery voltage power value, with which charging is permitted during a defined time, in a range in which battery voltage Vb does not exceed the upper limit voltage. As shown in Fig. 7, charging power upper limit value Win1 is set such that the charging power upper limit value is decreased as the SOC becomes higher.

It should be noted that power storage device 10 has temperature dependency such that internal resistance is increased when a temperature is lower as described above, so that charging power upper limit value Win1 is defined to be associated with the SOC for each battery temperature Tb.

On the other hand, charging power upper limit value Win2 is set in accordance with the SOC such that the amount of deposited lithium becomes not more than a permissible level. As described above, when power storage device 10 is charged in the low SOC region, the amount of deposited lithium is increased. Hence, charging power upper limit value Win2 is set to be lower as the SOC becomes lower. When charging power upper limit value Win2 = 0 is set, charging of power storage device 10 is prohibited. It should be noted that this charging power upper limit value Win2 is also defined to be associated with the SOC for each battery temperature Tb in consideration of the temperature dependency of the performance of the battery.

Hence, when a detection value of battery temperature Tb is provided from temperature sensor 12, charging power upper limit value Win1 and charging power upper limit value Win2 are calculated based on the SOC estimate value (#SOC) at present. Charging/discharging upper limit value setting unit 160 makes comparison between charging power upper limit value Win1 and charging power upper limit value Win2 both corresponding to the SOC estimate value (#SOC) at present. Of the charging power upper limit values thus compared, charging/discharging upper limit value setting unit 160 sets the smaller one in value as charging power upper limit value Win.

It should be noted that Fig. 7 shows that as a result of comparison between charging power upper limit values Win1 and Win2 for each SOC, the charging power upper limit value having a smaller value is illustrated by a solid line and the charging power upper limit value having a larger value is illustrated by a dotted line. In other words, charging power value Win is set in accordance with the SOC based on the relation indicated by the solid line of Fig. 7.

It should be noted that charging/discharging upper limit value setting unit 160 stores the charging characteristic (charging power upper limit values Win1, Win2) of power storage device 10 in Fig. 7 for each battery temperature Tb in the form of a map. With reference to the map stored based on the SOC estimate value (#SOC) and battery temperature Tb of power storage device 10 at each point of time, a corresponding charging power upper limit value Win is set.

When charging power upper limit value Win of power storage device 10 is set in accordance with the above-described control structure, charging instructing unit 170 (Fig. 5) sets charging power command value Pchg so as to charge power storage device 10 within the range defined by charging power upper limit value Win.

Referring to Fig. 8, the following describes how charging power command value Pchg of power storage device 10 is set.

Fig. 8 shows how the SOC of power storage device 10 and the charging power are changed with time due to traveling of hybrid vehicle 5. In Fig. 8, it is assumed that hybrid vehicle 5 is in the following traveling manner: traveling with regenerative braking to charge power storage device 10 as in deceleration or traveling down on a sloping road; and steady traveling in which charging power is smaller than that in the regenerative braking, or idle state (stop state) of the vehicle. Specifically, each of times T1, T3, T4, and T6 in the figure corresponds to the steady traveling or the idle state. Each of times T2 and T5 corresponds to the traveling with regenerative braking.

Referring to Fig. 8, when charging/discharging upper limit value setting unit 160 (Fig. 5) receives an SOC estimate value (#SOC) from state estimating unit 110 and receives battery data (battery temperature Tb) from monitoring unit 11, charging/discharging upper limit value setting unit 160 sets a charging power upper limit value Win in accordance with the SOC estimate value (#SOC) at present and battery temperature Tb using the above-described method. In Fig. 8, until the SOC estimate value (#SOC) reaches a predetermined threshold value SOCth, charging power upper limit value Win is set to be lower as the SOC estimate value (#SOC) is lower. On the other hand, when the SOC estimate value (#SOC) reaches threshold value SOCth, charging power upper limit value Win is set to be lower as the SOC estimate value (#SOC) is higher.

When the SOC estimate value (#SOC) is decreased to fall below the SOC control range of power storage device 10, charging instructing unit 170 instructs charging of power storage device 10. It should be noted that the SOC control range is set to have control widths for the upper limit side and the lower limit side relative to the control center value. Specifically, when the SOC estimate value (#SOC) is decreased to fall below the lower limit of the SOC control range, charging instructing unit 170 sets power command value Pchg > 0. Alternatively, Pchg > 0 may be set preparatorily while the SOC estimate value (#SOC) is within the SOC control range. When Pchg > 0, engine 18 is requested to operate. If engine 18 is nonoperational, engine 18 is started. Then, charging power command value Pchg is added to the output request for engine 18.

Further, during the regenerative braking, regenerative power generation by motor generator MG2 is restricted in accordance with charging power upper limit value Win set by charging/discharging upper limit value setting unit 160, thereby avoiding overcharging of power storage device 10.

Here, charging instructing unit 170 sets charging power command value Pchg to be variable in accordance with the SOC estimate value (#SOC). Specifically, as shown in Fig. 8, when the SOC estimate value (#SOC) is equal to or more than predetermined criteria value SOCth, charging power command value Pchg is set at a power value Pchg2. This power value Pchg2 is set in consideration of an operation line of engine 18 or the like to fall within a range of not more than charging power upper limit value Win such that engine 18 efficiently provides an output required for charging of power storage device 10.

On the other hand, when the SOC estimate value (#SOC) is lower than criteria value SOCth, charging power command value Pchg is set at power value Pchg1 smaller than power value Pchg2 and falling within the range of not more than charging power upper limit value Win.

Criteria value SOCth corresponds to a threshold value for determining whether or not the SOC is in the region in which the amount of deposited lithium may be abruptly increased during charging of power storage device 10. Criteria value SOCth is set to have a margin for the SOC corresponding to the permissible level of the amount of deposited lithium, based on the relation between the SOC of the lithium ion battery and the amount of deposited lithium in Fig. 6. Further, power value Pchg1 is adapted to be capable of suppressing the amount of deposited lithium to the permissible level or smaller by means of deterioration test or the like on power storage device 10.

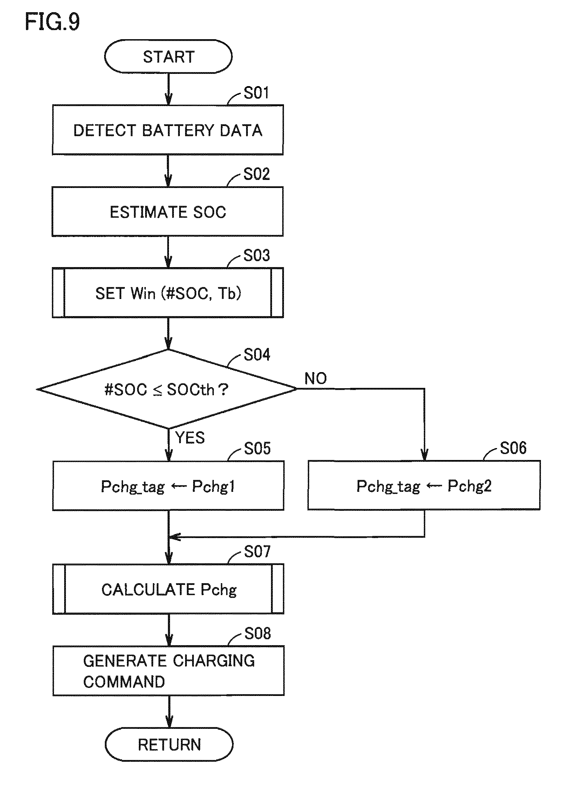

Fig. 9 is a flowchart showing a procedure of control process for implementing the charging control for the power storage device in the electrically powered vehicle according to the first embodiment of the present invention.

Referring to Fig. 9, in a step S01, control device 100 obtains battery data (Tb, Ib, Vb) from monitoring unit 11. Then, in a step S02, control device 100 estimates the SOC of power storage device 10. Namely, the process in S02 corresponds to the function of state estimating unit 110 shown in Fig. 4.

In a step S03, control device 100 sets charging power upper limit value Win of power storage device 10 based on the SOC estimate value (#SOC) calculated in step S02 as well as battery temperature Tb. The process in step S03 corresponds to the function of charging/discharging upper limit value setting unit 160 of Fig. 5.

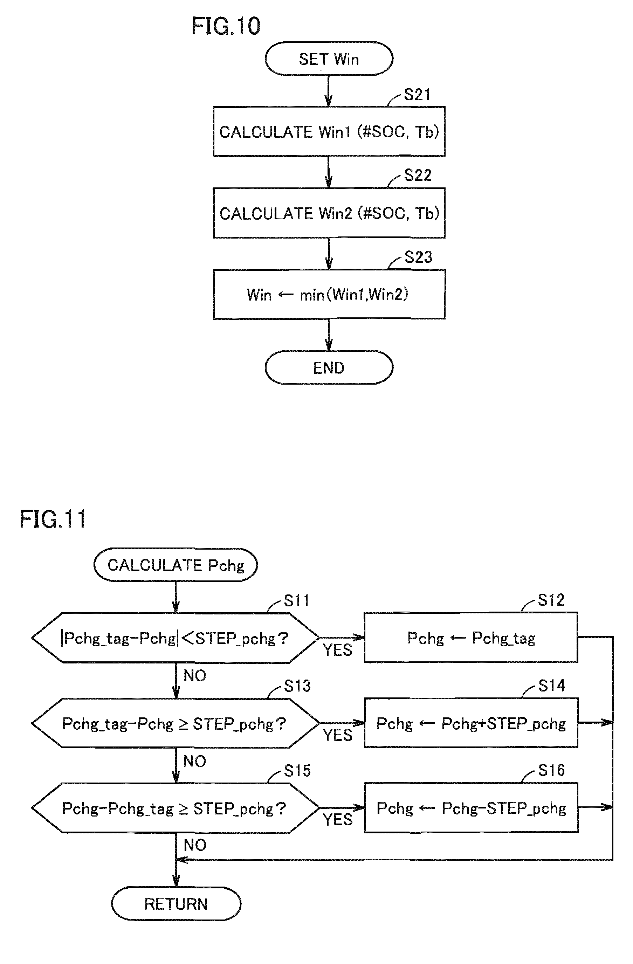

Fig. 10 is a flowchart illustrating the process in step S03 of Fig. 9 more in detail.

Referring to Fig. 10, in a step S21, based on the SOC estimate value (#SOC) calculated in step S02 and battery temperature Tb, control device 100 makes reference to a map set in advance in accordance with the charging characteristic (charging power upper limit value Win1) shown in Fig. 7, and sets a corresponding charging power upper limit value Win1.

After step S21, in a step S22, based on the SOC estimate value (#SOC) calculated in step S02 and battery temperature Tb, control device 100 makes reference to a map set in advance in accordance with the charging characteristic (charging power upper limit value Win2) shown in Fig. 7, and sets a corresponding charging power upper limit value Win2.

Then, in a step 23, control device 100 makes comparison between charging power upper limit value Win1 set in step S21 and charging power upper limit value Win2 set in step S22. Of the charging power upper limit values thus compared, control device 100 sets the smaller one in value as charging power upper limit value Win.

Referring to Fig. 9 again, in a step S04, control device 100 compares the SOC estimate value (#SOC) calculated in step S02 with threshold value SOCth (Fig. 8). When the SOC estimate value (#SOC) is equal to or smaller than threshold value SOCth (determined as YES in step S04), a charging power target value Pchg_tag = Pchg1 is set in a step S05. On the other hand, when the SOC estimate value (#SOC) is higher than threshold value SOCth (determined as NO in step S04), a charging power target value Pchg_tag = Pchg2 is set in a step S06.

Then, in a step S07, control device 100 calculates charging power command value Pchg based on charging power target value Pchg_tag set in step S05 or S06. When switching charging power command value Pchg between Pchg1 and Pchg2, control device 100 gradually changes charging power command value Pchg between Pchg1 and Pchg2. Such a process of gradually changing power command value Pchg is performed because hunting of engine speed might have been caused if charging power command value Pchg were abruptly changed to abruptly change the target rotational speed of engine 18.

Fig. 11 is a flowchart illustrating the process in step S07 of Fig. 9 more in detail.

Referring to Fig. 11, in a step S11, control device 100 subtracts charging power command value Pchg set previously by this routine, from charging power target value Pchg_tag set in step S05 or S06 in Fig. 9, thereby calculating a difference in electric power (= Pchg_tag - Pchg). Then, control device 100 compares the absolute value of the calculated difference in electric power with a predetermined value STEP_pchg. It should be noted that predetermined amount STEP_pchg is a rate value used in the process of gradually changing. Predetermined amount STEP_pchg is determined based on the performance of power storage device 10 and the specification of hybrid vehicle 5.

When the absolute value of the difference in electric power is smaller than predetermined value STEP_pchg (determined as YES in step S11), control device 100 sets charging power command value Pchg = Pchg_tag in a step S12.

On the other hand, when the absolute value of the difference in electric power is equal to or more than predetermined value STEP_pchg (determined as NO in step S11), control device 100 determines in a step S13 whether or not the difference in electric power is equal to or more than predetermined amount STEP_pchg When the difference in electric power is equal to or more than predetermined amount STEP_pchg (determined as YES in step S13), in a step S14, control device 100 sets, as charging power command value Pchg, a value obtained by adding predetermined amount STEP_pchg to charging power command value Pchg previously set.

On the other hand, when the difference in electric power is smaller than predetermined amount STEP_pchg in step S 13 (determined as NO in step S 13), in a step S 15, control device 100 subtracts charging power target value Pchg_tag from charging power command value Pchg set previously, thereby calculating a difference in electric power ( = Pchg - Pchg_tag). Then, control device 100 determines whether or not the calculated difference in electric power is equal to or more than predetermined amount STEP_pchg. When the difference in electric power is equal to or more than predetermined amount STEP_pchg (determined as YES in step S15), in a step S16, control device 100 sets, as charging power command value Pchg, a value obtained by subtracting predetermined amount STEP_pchg from charging power command value Pchg previously set.

Referring to Fig. 9 again, in a step S08, control device 100 generates a charging command based on charging power command value Pchg set in step S07. In other words, the function in step S07 and S08 corresponds to the function of charging instructing unit 170 shown in Fig. 5.

It should be noted that the process of gradually changing charging power command value Pchg in step S07 of Fig. 9 is not limited to the process shown in the flowchart of Fig. 11, as long as charging power command value Pchg can be gradually changed. As one example of the process of gradually changing, a primary filtering process may be employed.

Thus, according to the electrically powered vehicle in the first embodiment, in the low SOC region in which the amount of deposited lithium may be increased due to charging, development of deposition-related deterioration of power storage device 10 can be suppressed by restricting charging power for power storage device 10. Accordingly, the charging/discharging of power storage device 10 is permitted to such an extent that the amount of deposited lithium does not exceed the permissible level thereof. Hence, while suppressing the development of deterioration of power storage device 10, electric power stored in power storage device 10 can be effectively utilized.

In the first embodiment, it has been illustrated that charging power command value Pchg is set such that charging power command value Pchg is switched between power value Pchg 1 and power value Pchg2 in accordance with the result of comparing the SOC estimate value (#SOC) with criteria value SOCth. However, the setting is not limited to the above-described example as long as charging power command value Pchg can be set smaller as the SOC estimate value (#SOC) is lower. For example, the setting may be made in the following manner. That is, a plurality of criteria values are set in advance in the SOC control range. Whenever the SOC estimate value (#SOC) reaches or falls below the criteria values, charging power command value Pchg is decreased by a predetermined amount, with the result that charging power command value Pchg is gradually reduced according to decrease of the SOC estimate value (#SOC).

Alternatively, the setting may be made in the following manner. That is, by determining a relation between the SOC and the charging power (capable of suppressing increase of the amount of deposited lithium) by means of deterioration test or the like on power storage device 10, charging power command value Pchg adapted in advance in accordance with the SOC estimate value (#SOC) is stored by control device 100 in the form of a map.

Meanwhile, in the first embodiment, it has been illustrated that hybrid vehicle 5 is configured such that charging power command value Pchg to be reflected in an output request for engine 18 becomes a smaller value as the SOC estimate value (#SOC) becomes lower. However, the charging control in the present invention is not limited to the control only for charging power command value Pchg. The charging control in the present invention is control for overall charging power for power storage device 10. This overall charging power includes power regeneratively generated by motor generator MG2. Further, in the case where the present invention is applied to an electrically powered vehicle capable of charging its power storage device using a power source external to the vehicle, the overall charging power includes not only charging power for power storage device 10 during vehicle traveling but also charging power provided by such an external power source. In this case, when the SOC estimate value (#SOC) is lower than predetermined criteria value SOCth during each of the vehicle traveling and the charging using the external power source, the control device of the electrically powered vehicle restricts charging power for the power storage device.

### [Second Embodiment]

It has been illustrated that the electrically powered vehicle of the foregoing first embodiment is configured to suppress development of deterioration of power storage device 10 (in particular, deposition-related deterioration of the lithium ion battery) by restricting charging power in the low SOC region.

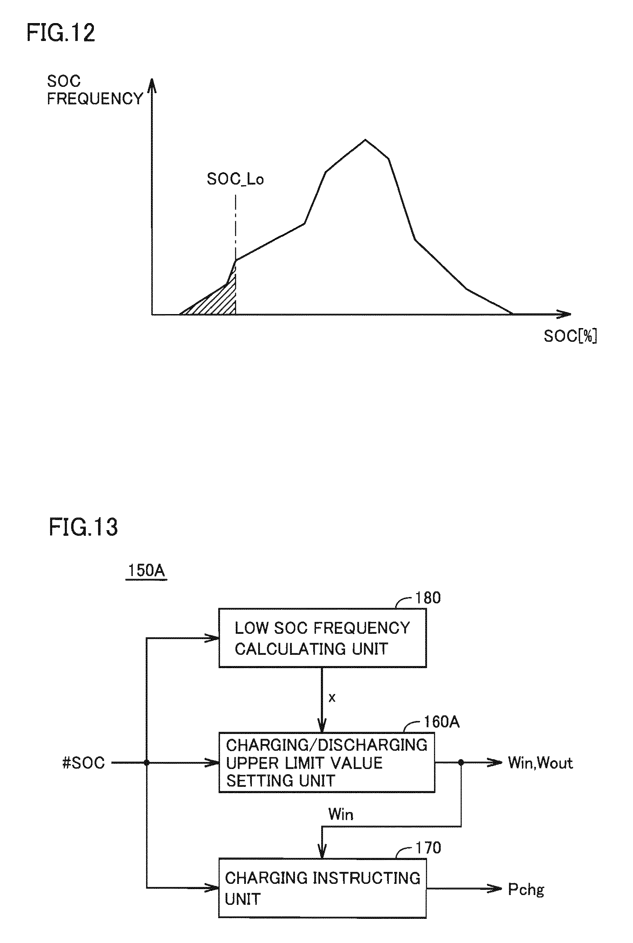

However, the degree of development of deterioration of power storage device 10 is dependent on how frequently the SOC of power storage device 10 becomes low. Hence, the degree of development of deterioration greatly differs depending on utilization history of power storage device 10, i.e., utilization history of hybrid vehicle 5. Fig. 12 is a conceptual view showing a distribution of SOC of power storage device 10 during a certain period of time.

An SOC control range for the SOC of power storage device 10 is set in advance to have control widths for the upper limit side and the lower limit side relative to a control center value. Charging/discharging of power storage device 10 is controlled to maintain the SOC estimate value (#SOC) in the SOC control range. Therefore, in the distribution of SOC as shown in Fig. 12, the SOC is less frequently in an SOC region higher or lower than around the control center value of the SOC control range.

Here, it is considered that the SOC of power storage device 10 becomes low during vehicle traveling, for example, in the following cases: EV traveling in which the vehicle travels using only driving power from motor generator MG2 with operation of engine 18 being stopped; and uphill traveling in which shortage in output of engine 18 is compensated with driving power provided by motor generator MG2. Accordingly, as such EV traveling or uphill traveling is performed more frequently, the SOC of power storage device 10 becomes low more frequently. As the SOC of power storage device 10 becomes low more frequently, power storage device 10 is more frequently charged in the low SOC region, with the result that the degree of development of deterioration of power storage device 10 becomes large.

In view of this, in the electrically powered vehicle of the second embodiment, restriction on charging power for power storage device 10 is changed in accordance with how frequently the SOC of power storage device 10 becomes low. It should be noted that the schematic configuration of the hybrid vehicle serving as a representative example of the electrically powered vehicle according to the second embodiment of the present invention is the same as that in Fig. 1 apart from its control structure in control device 100, and is therefore not described repeatedly in detail. Likewise, the configuration of control device 100 is the same as that in Fig. 4 apart from its control structure in charging/discharging control unit 150A, and is therefore not described repeatedly in detail.

Fig. 13 is a block diagram showing the control structure of charging/discharging control unit 150A in the control device according to the second embodiment of the present invention.

Referring to Fig. 13, charging/discharging control unit 150A is provided with a low SOC frequency calculating unit 180 and a charging/discharging upper limit value setting unit 160A instead of charging/discharging upper limit value setting unit 160 in charging/discharging control unit 150 shown in Fig. 5.

Low SOC frequency calculating unit 180 monitors the SOC estimate value (#SOC) calculated by state estimating unit 110 (Fig. 4), so as to calculate a frequency (hereinafter, referred to as "low SOC frequency") x, which represents how frequently the SOC of power storage device 10 becomes low. Low SOC frequency calculating unit 180 outputs calculated low SOC frequency x to charging/discharging upper limit value setting unit 160A. Charging/discharging upper limit value setting unit 160A sets charging power upper limit value Win based on the SOC estimate value (#SOC) and low SOC frequency x calculated by low SOC frequency calculating unit 180.

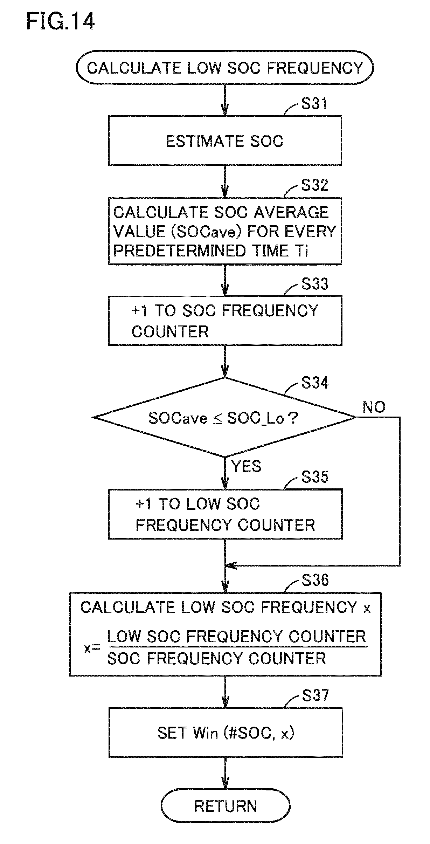

Fig. 14 is a flowchart showing a procedure of control process of low SOC frequency calculating unit 180.

Referring to Fig. 14, when low SOC frequency calculating unit 180 obtains the SOC estimate value (#SOC) of power storage device 10 from state estimating unit 110 (Fig. 4) in a step S31, low SOC frequency calculating unit 180 performs an averaging process in a step S32 so as to calculate, for every predetermined time Ti, an average value of SOC estimate values (#SOC) (hereinafter, referred to as "SOC average value SOCave") in predetermined time Ti.

In low SOC frequency calculating unit 180, a counter circuit (hereinafter, referred to as "SOC frequency counter") is provided to count how frequently the averaging process is performed. When the averaging process is performed in step S32, the count value is incremented in a step S33.

In a step S34, low SOC frequency calculating unit 180 compares SOC average value SOCave calculated in step S32 with a low SOC criteria value SOC_Lo set in advance. Low SOC frequency calculating unit 180 further includes a counter circuit (hereinafter, referred to as "low SOC frequency counter") for counting the low SOC frequency. When it is determined that SOC average value SCOave is equal to or less than low SOC criteria value SOC_Lo (determined as YES in step S34), a count value in the low SOC frequency counter is incremented in a step S35. Meanwhile, when it is determined that SOC average value SOCave is more than low SOC criteria value SOC_Lo (determined as NO in step S34), low SOC frequency calculating unit 180 maintains the count value.

It should be noted that low SOC criteria value SOC_Lo in step S34 corresponds to a threshold value for determining whether or not the SOC is in the region in which the amount of deposited lithium is drastically increased, i.e., in the region in which the deposition-related deterioration is developed. Thus, with the process in step S34, how frequently power storage device 10 is used in such a manner that the deposition-related deterioration is developed is extracted from the SOC distribution shown in Fig. 12.

Next, in a step S36, low SOC frequency calculating unit 180 calculates low SOC frequency x based on the count value of the SOC frequency counter in step S33 as well as the count value of the low SOC frequency counter in step S35.

In a step S37, charging/discharging upper limit value setting unit 160A sets charging power upper limit value Win based on low SOC frequency x calculated in step S36 and the SOC estimate value (#SOC).

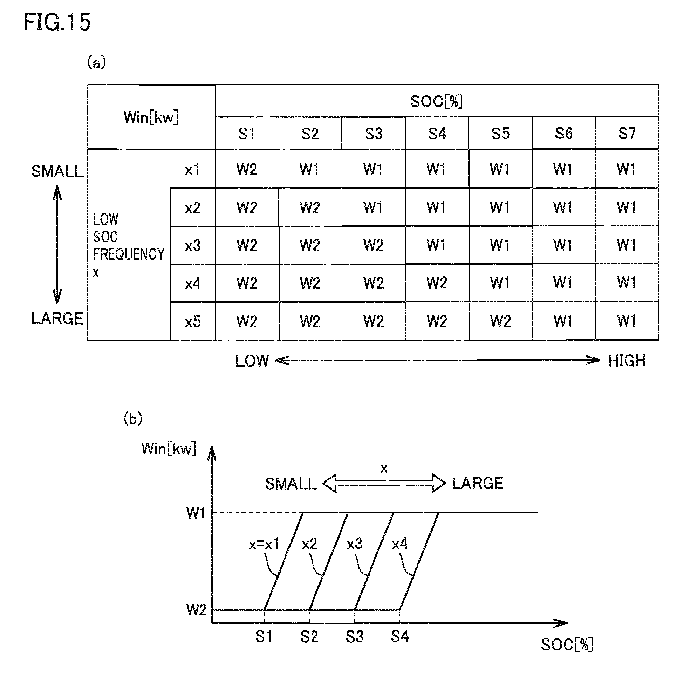

Referring to Fig. 15, the following fully describes how charging power upper limit value Win is set relative to the SOC estimate value (#SOC) and low SOC frequency x.

Fig. 15(a) shows one example of a map for setting the charging power upper limit value. Fig. 15(b) shows a relation between the SOC of power storage device 10 and charging power upper limit value Win, the relation being defined by the map for setting the charging power upper limit value as shown in Fig. 15(a).

Referring to Fig. 15(a), charging power upper limit value Win is set to be variable in accordance with the SOC estimate value (#SOC). For example, when low SOC frequency x = x3 and the SOC estimate value (#SOC) is equal to or more than S4, charging power upper limit value Win is set at W1. When low SOC frequency x = x3 and the SOC estimate value (#SOC) is lower than S4, charging power upper limit value Win is set at W2 (W2 < W1). In other words, when low SOC frequency x = x3, S4 is regarded as the criteria value and charging power upper limit value Win is set to be decreased if the SOC estimate value (#SOC) is decreased to fall below the criteria value.

In the second embodiment, the criteria value for determining whether to decrease charging power upper limit value Win, i.e., whether to restrict the charging power is set to be variable in accordance with low SOC frequency x. In Fig. 15(a), when low SOC frequency x = x5, the criteria value is set at S6. Meanwhile, when low SOC frequency x is decreased to x4, the criteria value is set at S5, which is smaller than S6. Further, when low SOC frequency x is decreased to x3, the criteria value is set at S4, which is smaller than S5. In this way, the criteria value is set at a smaller value as low SOC frequency x is lower. Thus, as shown in Fig. 15(b), the criteria value is set to be decreased when low SOC frequency x becomes low.

As described above, the electrically powered vehicle according to the second embodiment sets the charging power for power storage device 10 in the low SOC region to be variable in accordance with the degree of development of deterioration of power storage device 10. The degree of development is estimated from low SOC frequency x. In this way, when it is determined that the low SOC frequency is high and the degree of development of deterioration is large, the development of deterioration of power storage device 10 can be suppressed by restricting the charging power. On the other hand, when it is determined that the low SOC frequency is low and the degree of development of deterioration is small, the amount of electric power accumulated in power storage device 10 can be increased by easing the restriction on the charging power. As a result, while suppressing the development of deterioration, driveability of the electrically powered vehicle can be avoided from being decreased due to shortage in output of power storage device 10.

### (Modification)

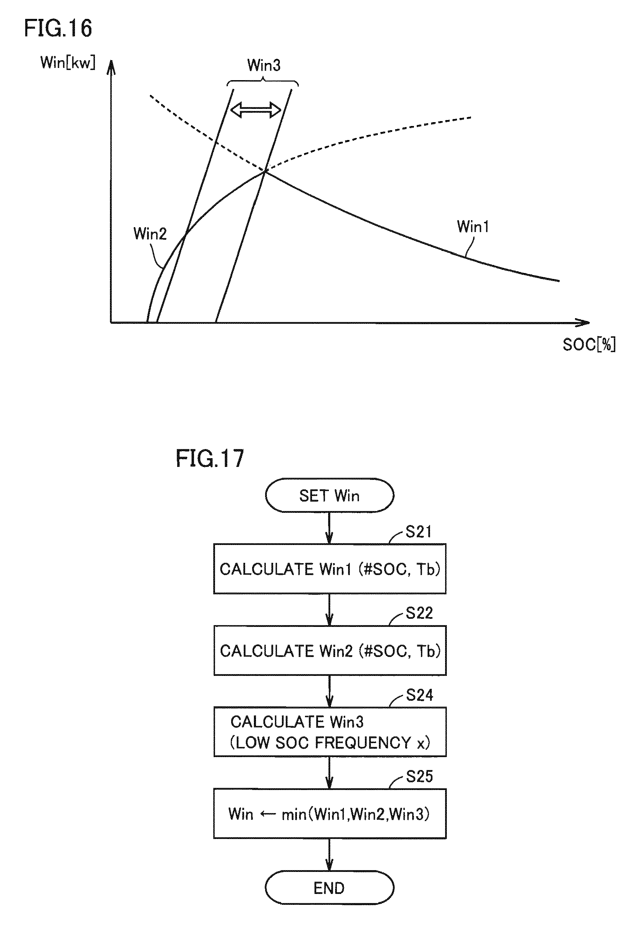

The setting of charging power upper limit value Win in the second embodiment may be combined with the setting of charging power upper limit value Win in the above-described first embodiment, so as to set a final charging power upper limit value Win. Fig. 16 shows that charging power upper limit value Win (corresponding to charging power upper limit value Win3 in the figure) set in the second embodiment is overlapped with the charging characteristic of power storage device 10 of Fig. 7. Fig. 17 is a flowchart illustrating a process of setting the charging power upper limit value in the electrically powered vehicle according to the modification of the second embodiment of the present invention.

Referring to Fig. 17, when a detection value of battery temperature Tb is provided from temperature sensor 12, charging power upper limit values Win1, Win2 are calculated based on the SOC estimate value (#SOC) at present. Further, charging power upper limit value Win3 is calculated based on the SOC estimate value (#SOC) at present and low SOC frequency x. Charging/discharging upper limit value setting unit 160A makes comparison among charging power upper limit value Win1, charging power upper limit value Win2, and charging power upper limit value Win3, which correspond to the SOC estimate value (#SOC) at present. Of the charging power upper limit values thus compared, charging/discharging upper limit value setting unit 160A sets the smallest one in value as charging power upper limit value Win. Fig. 17 is a flowchart showing a procedure of control process for implementing the charging control for the power storage device in the electrically powered vehicle according to the first embodiment of the present invention.

Referring to Fig. 17, when charging/discharging upper limit value setting unit 160A obtains battery data (Tb, Ib, Vb) from monitoring unit 11 and obtains the SOC estimate value (#SOC) from state estimating unit 110, in step S21, charging/discharging upper limit value setting unit 160A makes reference to a map set in advance in accordance with the charging characteristic (charging power upper limit value Win1) shown in Fig. 16, based on the SOC estimate value (#SOC) and battery temperature Tb, and sets a corresponding charging power upper limit value Win1.

Next, in step S22, charging/discharging upper limit value setting unit 160A makes reference to a map set in advance in accordance with the charging characteristic (charging power upper limit value Win2) shown in Fig. 16, based on the SOC estimate value (#SOC) calculated in step S02 and battery temperature Tb, and sets a corresponding charging power upper limit value Win2.

Further, in a step S24, charging/discharging upper limit value setting unit 160A makes reference to the map shown in Fig. 15(a) for setting the charging power upper limit value, based on low SOC frequency x and the SOC estimate value (#SOC), and sets a corresponding charging power upper limit value Win3.

Then, in a step S25, charging/discharging upper limit value setting unit 160A makes comparison among charging power upper limit value Win1 set in step S21, charging power upper limit value Win2 set in step S22, and charging power upper limit value Win3 set in step S24, and sets the smallest one in value as charging power upper limit value Win.

In each of the first and second embodiments, the lithium ion battery has been illustrated as one example of power storage device 10, but the application of the present invention is not limited to the lithium ion battery. Specifically, the present invention can be applied to a power storage device in which deposition-related deterioration takes place due to a phenomenon of deposition of metal on an electrode surface during charging.

Further, in the first and second embodiments, it has been illustrated that in view of the correlation between the SOC of power storage device 10 and the restraint stress on the plurality of cells of the secondary battery constituting power storage device 10, the degree of development of deposition-related deterioration of the power storage device is estimated based on the SOC estimate value (#SOC) of power storage device 10 and the result of estimation is reflected in the control for charging of power storage device 10. However, apparently, the effect of the present invention can be attained also in the following configuration. That is, the restraint stress is directly detected by measuring the internal pressure of power storage device 10 using a pressure sensor or the like, and the charging power of power storage device 10 is controlled in accordance with the detection value.

Described as one example of the electrically powered vehicle in each of the first and second embodiments is the vehicle configured to have engine 18 as a driving power source and be capable of generating charging power for power storage device 10 using the output of engine 18. However, the present invention can be applied as long as the electrically powered vehicle is provided with a power generating structure for charging the power storage device provided therein during traveling. For example, the present invention can be also applied to a hybrid vehicle having a hybrid configuration different from that of Fig. 1 (for example, so-called "series hybrid configuration" or "electrical distribution type hybrid configuration") or can be also applied to an electric vehicle and a fuel cell vehicle. Moreover, the present invention can be also applied to an electrically powered vehicle capable of charging its power storage device using a power source external to the vehicle.

The embodiments disclosed herein are illustrative and non-restrictive in any respect. The scope of the present invention is defined by the terms of the claims, rather than the embodiments described above, and is intended to include any modifications within the scope and meaning equivalent to the terms of the claims.

### INDUSTRIAL APPLICABILITY

The present invention can be applied to an electrically powered vehicle including: a power storage device in which deposition-related deterioration takes place due to a phenomenon of deposition of metal on an electrode surface during charging; and a power generating structure for generating charging power for the power storage device.

### REFERENCE SIGNS LIST

5: hybrid vehicle; 6: converter; 7: system main relay; 8: inverter; 10: power storage device; 11: monitoring unit; 12: temperature sensor; 13, 16: voltage sensor; 14: current sensor; 18: engine; 22: power split device; 24F: driving wheel; 50: power control unit; 95: speed reducer; 100: control device; 110: state estimating unit; 150, 150A: charging/discharging control unit; 160, 160A: charging/discharging upper limit value setting unit; 170: charging instructing unit; 180: low SOC frequency calculating unit; 200: traveling control unit; 202: sun gear; 204: pinion gear; 206: carrier; 208: ring gear; 250: distributing unit; 260: inverter control unit; 270: converter control unit; C: smoothing capacitor; MG1, MG2: motor generator; MNL: negative bus; MPL: positive bus.

## Claims

1. An electrically powered vehicle comprising:
a power storage device (10) in which deposition-related deterioration takes place due to a phenomenon of deposition of metal on an electrode surface during charging;
a power generating structure (MG1, MG2) for generating charging power for said power storage device (10);
a charge state estimating unit (110) for estimating a remaining level of said power storage device (10) based on a state value of said power storage device (10); and
a charging/discharging control unit (150, 150A) for controlling charging/discharging of said power storage device (10) based on a remaining level estimate value estimated by said charge state estimating unit (110),
said charging/discharging control unit (150, 150A) restricting said power generating structure (MG1, MG2) from generating the charging power for said power storage device (10) when said remaining level estimate value is decreased to fall below a predetermined criteria value.

2. The electrically powered vehicle according to claim 1, wherein
said charging/discharging control unit (150) includes an upper limit value setting unit (160) for setting a charging power upper limit value for a present state of said power storage device (10) at least based on said remaining level estimate value and a temperature of said power storage device (10), and
when said remaining level estimate value is decreased to fall below said criteria value, said upper limit value setting unit (160) decreases said charging power upper limit value as said remaining level estimate value becomes smaller.

3. The electrically powered vehicle according to claim 2, wherein
said charging/discharging control unit (150A) further includes a low remaining level frequency calculating unit (180) for calculating a low remaining level frequency, which represents how frequently said remaining level estimate value becomes equal to or less than a predetermined threshold value, and
said upper limit value setting unit (160A) decreases said criteria value as said low remaining level frequency becomes smaller.

4. The electrically powered vehicle according to claim 1, wherein
said charging/discharging control unit (150) includes a charging instructing unit (170) for causing said power generating structure (MG1) to generate said charging power at least when said remaining level estimate value reaches a lower limit value of a control range, and
said charging instructing unit (170) causes said charging power to decrease from a first value to a second value when said remaining level estimate value is smaller than said criteria value.

5. The electrically powered vehicle according to claim 4, wherein said charging instructing unit (170) switches between said first value and said second value by gradually changing said charging power between said first value and said second value.

6. The electrically powered vehicle according to claim 1, wherein
said charging/discharging control unit (150) includes a charging instructing unit (170) for causing said power generating structure (MG1) to generate said charging power at least when said remaining level estimate value reaches a lower limit value of a control range, and
when said remaining level estimate value is smaller than said criteria value, said charging instructing unit (170) causes said charging power to decrease as said remaining level estimate value becomes smaller.

7. The electrically powered vehicle according to claim 1, wherein
said charging/discharging control unit (150) includes an upper limit value setting unit (160) for setting a charging power upper limit value for a present state of said power storage device (10) at least based on said remaining level estimate value and a temperature of said power storage device (10), and
said upper limit value setting unit (160) sets said charging power upper limit value so as to satisfy a first condition and a second condition, said first condition being such that a voltage of said power storage device (10) does not exceed a predetermined voltage upper limit value, said second condition being such that a degree of deposition-related deterioration of said power storage device (10) does not exceed a predetermined permissible level.

8. The electrically powered vehicle according to claim 1, wherein said criteria value is set based on a correlation between restraint stress and said remaining level, said restraint stress being imposed on a plurality of power storage cells included in said power storage device (10).

9. A method for controlling an electrically powered vehicle (5) including a power storage device (10) in which deposition-related deterioration takes place due to a phenomenon of deposition of metal on an electrode surface during charging, and a power generating structure (MG1, MG2) for generating charging power for said power storage device (10),
the method comprising the steps of:
estimating a remaining level of said power storage device (10) based on a state value of said power storage device (10); and
controlling charging/discharging of said power storage device (10) based on a remaining level estimate value estimated,
the step of controlling charging/discharging restricting said power generating structure (MG1) from generating the charging power for said power storage device (10) when said remaining level estimate value is decreased to fall below a predetermined criteria value.
